# EUROPEAN PATENT APPLICATION

(11) **EP 1 993 281 A2**
(43) Date of publication of application: **19.11.2008**
(21) Application number: 08151431.7
(22) Date of filing: 14.02.2008
(51) Int. Cl.: H04N 5/445

(54) **Broadcast Receiving Apparatus And Method For Replaying Content Thereby**

(30) Priority: 14.05.2007 KR 20070046517
(71) Applicant: Samsung Electronics Co., Ltd., Suwon-si, Gyeonggi-do 442-742 (KR)
(72) Inventor: Lee, Chang-soo, Seoul (KR); Kim, Joon-hwan, Giheung-gu, Yongin-si Gyeonggi-do (KR); Lee, Hyen ji, Gyeonggi-do (KR)
(74) Representative: Clark, David James

(57) **Abstract**

A broadcasting receiving apparatus (100) and a method for replaying content received thereby are provided. The method for replaying displays a video signal and content on a display, and the broadcast receiving apparatus includes a control unit (510) which controls to output a video signal on a first screen, and to output a content list including broadcast content and multimedia content on a second screen. As a result, multitasking is possible in which content is searched by a user, and selected content is replayed while a broadcast signal received from a broadcast station is processed and displayed on a display (530).

## Description

### BACKGROUND OF THE INVENTION

### 1. Field of the Invention

Apparatuses and methods consistent with the present invention relate to a broadcast receiving apparatus and a method for replaying content.

### 2. Description of the Related Art

A broadcast receiving apparatus receives a digital satellite broadcast. The broadcast receiving apparatus converts video and audio signals which are input from a digital broadcast or an analogue broadcast, and external apparatuses such as a video player or a digital versatile disc (DVD) player, into a transport stream (TS) signal, and transmits the converted signal to a display apparatus. The broadcast receiving apparatus may for example be a digital television or a set top box.

Broadcast receiving apparatuses have developed rapidly in recent years, and have been provided with an increasing number of functions.

The broadcast receiving apparatus not only outputs a broadcast signal transmitted from a broadcast station on a display, but also may output various kinds of multimedia content, such as music, video, and pictures, on a display.

If a command for replaying multimedia content is received while a broadcast receiving signal is output on the display, a conventional broadcast receiving apparatus replays multimedia content input by the user through conversion from a broadcasting mode for outputting the broadcast signal received from the broadcast station to a content mode, on the display. That is, if a multimedia content is selected by a user using a menu, the broadcast signal is interrupted, and a menu screen which corresponds to a multimedia content replay selected by a user is output on the display.

A conventional broadcast receiving apparatus interrupts output of a broadcast signal being output on the display to replay multimedia content, and outputs a menu related to content replayed on the display. Accordingly, a multicasting providing a real-time broadcast program and multimedia content such as a sport replay is impossible.

A user selects content to be replayed using an initial menu when a mode is converted from a broadcasting mode to a content mode. That is, a conventional broadcast receiving apparatus receives a selection of content which a user desires to replay using an initial menu, to replay content which is selected by a user from among various kinds of multimedia content, and enters a content mode providing a menu which is related to the selected content. Accordingly, a plurality of steps are required to replay content.

A conventional broadcast apparatus as described requires a plurality of steps to replay content selected by a user, and so a search key is frequently used to replay content.

### SUMMARY OF THE INVENTION

Exemplary embodiments of the present invention aim to address the above disadvantages and other disadvantages not described above.

According to an aspect of the present invention, there is provided a method for replaying content comprising outputting a first type of content on a first screen of a display; controlling to output a list of content of a second type on a second screen of the display; and replaying the first and second type of content on the first and second screens simultaneously.

The first type of content may be a broadcast signal received from a broadcast station, and the second type of content comprises multimedia content comprising at least one of, for example, but not limited to, recorded content, picture, video, and music.

The method may further comprise controlling to output the first type of content on the second screen, and to output the selected second type of content on the first screen, if one of the second type of content from the list on the second screen is selected while the first type of content is output on the first screen.

The second screen may comprise a content display area, and a list display area, and the controlling may involve controlling to output the list of the second type of content on the list display area, and to output a video corresponding to activated content from the list on the content display area.

If content from the list of the second type of content output on the second screen is selected by user manipulation using a remote control apparatus, the controlling may involve controlling to output the selected content on the first screen.

The controlling may involve controlling to change lists of the content type output on the second screen as a result of user manipulation of the remote control apparatus.

The controlling may involve controlling to process the broadcast signal and output the processed signal as a video signal on the first screen.

The size of the first screen may be larger than the size of the second screen.

The size of the first and second screens may be adjustable by a user.

The position of the second screen may be settable by a user. The controlling may involve controlling to change the second type of content as a result of user manipulation using a hot key on the remote control apparatus.

According to another aspect of the present invention, there is provided a broadcast receiving apparatus comprising a display which displays a first screen outputting a first type of content, and a second screen outputting a list of a second type of content; and a control unit which controls to output the first type of content on the first screen, and to output a list of the second type of content on the second screen, and controls to replay the first type of content and the second type of content simultaneously.

The first type of content may be a broadcast signal received from a broadcast station, and the second type of content comprises a multimedia content comprising at least one of, for example, but not limited to, recorded content, picture, video, and music.

If one item from the list of the second type of content on the second screen is selected while the first type of content is output on the first screen, the control unit may control to output the first type of content on the second screen, and to output the selected second type of content on the first screen.

The second screen may comprise a content display area, and a list display area, and the control unit may control to output the list of the second type of content on the list display area, and to output video corresponding to activated content in the list on the content display area.

If content from the list of the second type content output on the second screen is selected by user manipulation using a remote control apparatus, the control unit may control to output the selected content on the first screen.

The control unit may control to change lists according to the content type output on the second screen by user manipulation using the remote control apparatus.

The size of the first screen may be larger than the size of the second screen.

The size of the first and second screens may be adjustable by a user.

The position of the second screen may be settable by a user.

The control unit may control to process the broadcast signal and to output the processed signal as a video signal on the first screen.

The control unit may control to change the second type of content as a result of user manipulation using a hot key on the remote control apparatus.

According to yet another aspect of the present invention, there is provided a method for replaying content comprising outputting a first type of content on a first screen of a display; and outputting the first type of content and a second type of content on a second screen of the display.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a broadcast receiving apparatus according to an exemplary embodiment of the present invention;
FIG. 2 is a view displaying a music content list on a sub-screen according to an exemplary embodiment of the present invention;
FIG. 3 is a flow chart illustrating an operating method of a broadcast receiving apparatus according to an exemplary embodiment of the present invention;
FIG. 4 is a flow chart illustrating an operating method of a broadcast receiving apparatus according to another exemplary embodiment of the present invention;
FIG. 5 is a block diagram illustrating a broadcast receiving apparatus according to another exemplary embodiment of the present invention; and
FIG. 6 is a flow chart illustrating an operating method of a broadcast receiving apparatus according to yet another exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

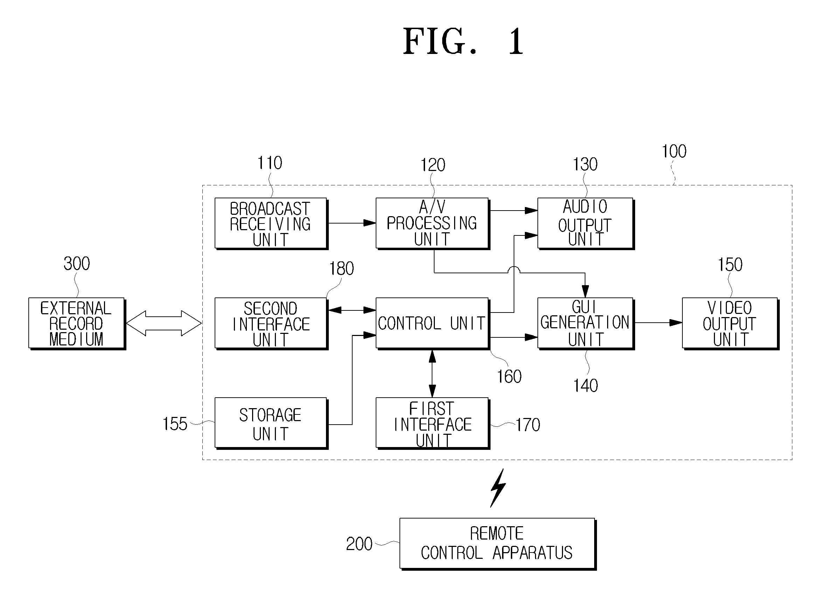

FIG. 1 is a block diagram of a broadcast receiving apparatus according to an exemplary embodiment of the present invention. Referring to FIG. 1, a broadcast receiving apparatus 100 may comprise a broadcast receiving unit 110, an audio/video (A/V) processing unit 120, an audio output unit 130, a graphical user interface (GUI) generation unit 140, a video output unit 150, a storage unit 155, a control unit 160, a first interface unit 170, and a second interface unit 180.

The broadcast receiving unit 110 receives and decodes broadcast signal transmitted over wire or wirelessly from a broadcast station or a satellite.

The A/V processing unit 120 performs signal processing such as video decoding, video scaling, or audio decoding of a broadcast signal output from the broadcast receiving unit 110. The A/V processing unit 120 transmits a video signal to the GUI generation unit 140, and transmits an audio signal to the audio output unit 130.

The audio output unit 130 outputs an audio output from the A/V processing unit 120 via a speaker, or outputs the audio to an external apparatus connected through an external output terminal.

The GUI generation unit 140 generates a GUI which is displayed on a display, that is, on the video output unit 150, and combines the generated GUI with a video which is output from the A/V processing unit 120. The GUI generation unit 140 generates a GUI corresponding to a content search command received from the control unit 160, which will be explained below, and outputs the generated GUI on the video output unit 150.

The video output unit 150 displays a video combining the GUI output from the GUI generation unit 140 on a display, or outputs the video to an external apparatus such as an external television (TV) connected through an external output terminal (not shown).

The storage unit 155 stores programs and broadcast content to control overall operations of the broadcast receiving apparatus 100. The broadcast content comprises recorded content which represents a previously recorded broadcast program, a schedule list of broadcast programs to be recorded, and a preferred channel pre-selected by a user, and each kind of broadcast content comprises a flag or code value representing the type of content broadcast.

The control unit 160 reads from the external record medium 300 metadata corresponding to multimedia content which is stored in an external record medium 300 connected through the second interface unit 180 if a content search command is received from a remote control apparatus 200 through the first interface unit 170. The content search command is received by user manipulation using a content search key on the remote control apparatus 200.

The metadata comprise at least one of information of the type of content, the date of production of the content, the size of the content, and the metadata are preset when the content is generated. The remote control apparatus 200 may be a remote controller, and the external record medium 300 may be, for example, but not limited to, a Personal Video Recorder (PVR), a Universal Serial Bus (USB) memory, and a Hard Disc Drive (HDD).

The control unit 160 generates a content list which categorizes content according to the content type based on metadata corresponding to multimedia content or a flag indicating broadcast content. The control unit 160 controls the GUI generation unit 140 to output the generated content list on the video output unit 150. The multimedia content comprises, for example, but not limited to, picture, video, and music.

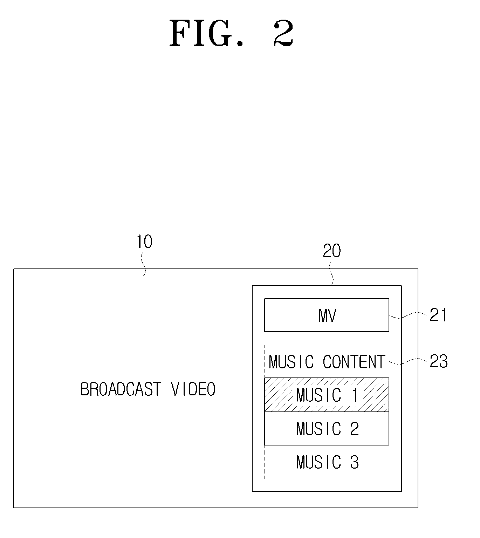

Referring to FIG. 2, the control unit 160 generates a content list by categorizing multimedia content and broadcast content stored in the external recording medium 300 and the storage unit 155. The control unit 160 outputs the generated content list on a list display area 23 of a sub-screen 20, and controls the GUI generation unit 140 to output the video signal output from the A/V processing unit 120 on a main screen 10.

If the content output on the sub-screen 20 is music, the control unit 160 controls the audio output unit 130 to mute the broadcast sound such as sound included with the video signal output on the main screen 10.

If a content selection command is received from the remote control unit 200 through the first interface unit 170, the control unit 160 controls the GUI generation unit 140 to output content corresponding to the content selection command on the main screen 10, and to output the video signal output from the A/V processing unit 120 on the sub-screen 20.

The control unit 160 controls the GUI generation unit 140 to output the content on the main screen 10 selected by user manipulation using, for example, up/down arrow keys and a selection key on the remote control apparatus 200, and output the video signal output from the A/V processing unit 120 on the sub-screen 20. The control unit 160 controls the GUI generation unit 140 to output on the list display area 23 of the sub-screen 20 information on the content list which is changed by user manipulation using, for example, left/right arrow keys on the remote control apparatus 200.

The control unit 160 controls the GUI generation unit 140 to output on a content display area 21 of the sub-screen 20 a video or a picture related to activated content among the content list output on the sub-screen 20, prior to content selection by the user. For example, if a music track from the music content list is activated, the control unit 160 controls the GUI generation unit 140 to output a music video or a picture of a music album related to the activated music on the content display area 21.

The control unit 160 controls the GUI generation unit 140 to output on the main screen 10 a list of supplementary functions according to the content type, and executes an operation corresponding to a supplementary function selected by the user.

For example, if a user selects a first picture from a picture content list including first to fourth pictures, the first picture is output on the main screen 10, and the control unit 160 controls the GUI generation unit 140 to output on the main screen 10 a list of supplementary functions, for example, but not limited to, "slide show", "brighten", "darken", and "user brightness", supported by the picture content.

The control unit 160 performs operations corresponding to the supplementary function selected by the user from among the supplementary functions output on the main screen 10. For example, if the user selects "slide show", the control unit 160 controls the GUI generation unit 140 to output the first to fourth pictures on the main screen 10 as a slide show.

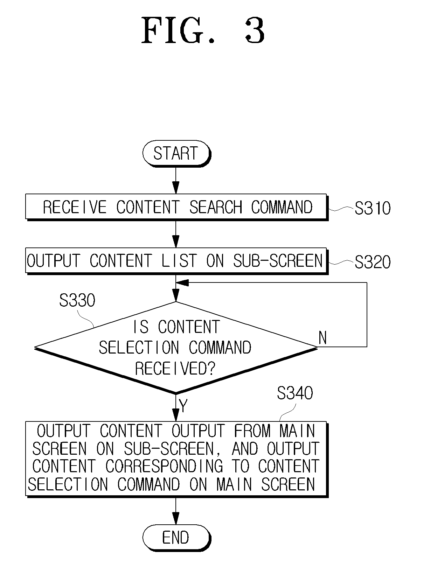

FIG. 3 is a flow chart illustrating an operating method of a broadcast receiving apparatus according to an exemplary embodiment of the present invention.

Referring to FIG. 3, if a content search command is received from the remote control apparatus 200 (S310), the control unit 160 generates a content list, and outputs the generated content list on the sub-screen 20 (S320).

If the content search command is received by user manipulation using a content searching key on the remote control apparatus 200 through the first interface unit 170 in operation S310, the control unit 160 generates a content list categorizing the content according to the presence of metadata corresponding to content stored in the external recording medium 300 or a flag corresponding to content stored in the storage unit 155.

The control unit 160 controls the GUI generation unit 140 to output the generated content list on the list display area 23 of the sub-screen 20, and to output the video corresponding to the activated content in the content list on the content display area 21 of the sub-screen 20 (S320). The content stored in the external recording medium 300 may comprise multimedia content, for example, but not limited to, picture, video, and music, and the content stored in the storage unit 155 may comprise broadcast content, for example, but not limited to, recorded broadcast programs, commercial broadcasts, and content received from a broadcast station.

The metadata comprise at least one of information on the type of content, the date of production of the content, and the size of the content. The metadata are preset when the content is generated. The remote control apparatus 200 may be a remote controller, and the external record medium 300 may be, for example, but not limited to, a Personal Video Recorder (PVR), a Universal Serial Bus (USB) memory, and a Hard Disc Drive (HDD).

If a content selection command is received from the remote control apparatus 200 (S330:Y), the control unit 160 outputs a video signal output from the main screen 10 on the sub-screen 20, and outputs content corresponding to the content selection command on the main screen 10 (S340).

In particular, if content in a content list output on the sub-screen 20 is selected by user manipulation using up and down arrow keys and a selection key on the remote control apparatus 200, the remote control apparatus 200 transmits the content selection command to the broadcast receiving apparatus 100. The control unit 160 controls the GUI generation unit 140 to output the selected content on the main screen 10 in response to the content selection command received through the first interface unit 170, and to output the video signal output from the A/V processing unit 120 on the sub-screen 20 (S340).

The control unit 160 controls the GUI generation unit 140 to output on the list display area 23 of the sub-screen 20 information about the content list which is changed by user manipulation using, for example, left and right arrow keys on the remote control apparatus 200. That is, the control unit 160 may change items of a list which is output on the sub-screen 20 by user manipulation using, for example, left/right arrow keys on the remote control apparatus 200 into items related to, for example, but not limited to, music, picture, video, recorded content, schedule list, or preferred channel.

On the other hand, if content is not selected from the content list output on the sub-screen 20 by user manipulation in operation S330 (S330:N), the video corresponding to the content activated by user manipulation using, for example, up and down arrow keys from among contents which are output on the list display area 23 of the sub-screen 20 is output in the content display area 21. The video output in the content display area 21 may comprise pictures or a video.

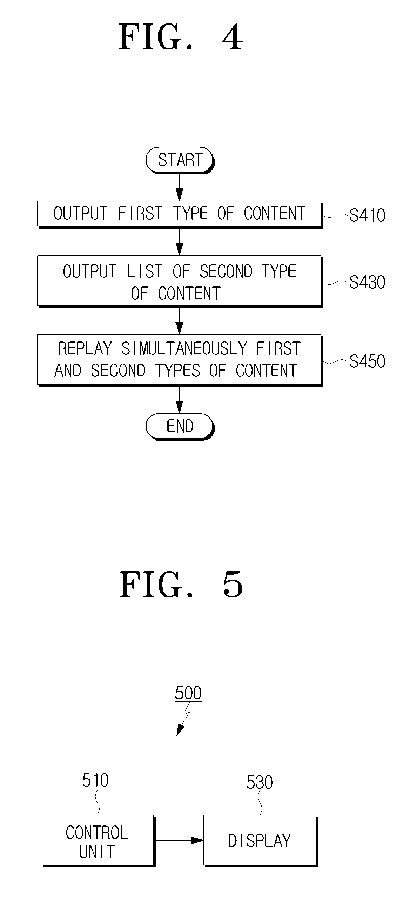

FIG. 4 is a flow chart illustrating an operating method of a broadcast receiving apparatus according to another exemplary embodiment of the present invention.

A broadcast receiving apparatus outputs a first type of content on a first screen of a display which is provided in the broadcast receiving apparatus (S410).

The broadcast receiving apparatus subsequently outputs a list of a second type of content on a second screen of the display which is provided in the broadcast receiving apparatus (S430).

The broadcast receiving apparatus replays the first and second types of content on the first and second screens simultaneously (S450).

FIG. 5 is a block diagram illustrating a broadcast receiving apparatus according to another exemplary embodiment of the present invention. The broadcast receiving apparatus 500 may comprise a control unit 510 and a display 530.

The control unit 510 controls a first type content and a second type content so that a first type content is output on a first screen of the display 530, and a second type content is output on a second screen of the display 530. The control unit 510 controls the first and second type contents so that the first and second type contents are replayed concurrently on the first and second screens.

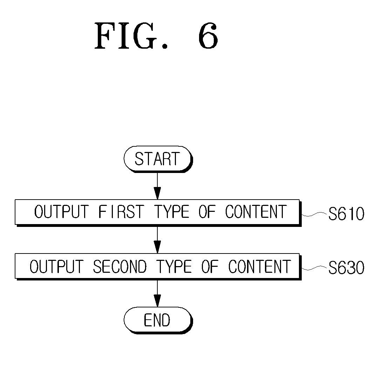

FIG. 6 is a flow chart illustrating an operating method of a broadcast receiving apparatus according to yet another exemplary embodiment of the present invention.

A broadcast receiving apparatus outputs a first type of content on a first screen of a display (S610).

The broadcast receiving apparatus outputs a second type of content on a second screen of the display (S630).

The position of the sub-screen 20 on a display on which a content list is output is preset in a broadcast receiving apparatus and a method for replaying content thereby according to an exemplary embodiment of the present invention, but the present invention is not limited to such a configuration. Alternatively, the position of the sub-screen 20 may be set by a user.

The size of the sub-screen 20 on the display is preset in a broadcast receiving apparatus and a method for replaying content thereby according to an exemplary embodiment of the present invention, but the present invention is not limited to such a configuration. Alternatively, the size of the sub-screen 20 may be adjusted by a user.

A content selection and a content type are changed by user manipulation using the up, down, left, and right arrow keys and the selection key on the remote control apparatus 200 in a broadcast receiving apparatus and a method for replay content thereby according to an exemplary embodiment of the present invention, but the present invention is not limited to such a configuration. Alternatively, content selection and content type may be changed by a preset movement pattern of a remote control by manipulation of, for example, but not limited to, a touch pad or a joystick.

A content search command is received by user manipulation using the content search key on the remote control apparatus 200 according to an exemplary embodiment of the present invention, but the present invention is not limited to such a configuration. Alternatively, one of the keys of the remote control apparatus 200 may be used as a content search key instead of the content search key.

The content search key is provided on the remote control apparatus 200 according to an exemplary embodiment of the present invention, but the present invention is not limited to such a configuration. The content search key may alternatively be provided on the broadcast receiving apparatus 100.

The video signal is output on the main screen 10, and the content list is output on the sub-screen 20 when a content search command is received according to an exemplary embodiment of the present invention, but the present invention is not limited to such a configuration. Alternatively, the control unit 160 may control the GUI generation unit 140 to output the selected content on the main screen 10 and to output the content being output on the main screen 10 on the sub-screen when the content search command is received from the remote control apparatus 200, while content other than the video signal is output on the main screen 10.

If a content movement command is received from the remote control apparatus 200 due to user manipulation, the control unit 160 moves the content selected by the user to a device selected by the user in a broadcast receiving apparatus and a method for replay content thereby according to an exemplary embodiment of the present invention. The device selected by the user may be an external apparatus (not shown) which is connected to the storage unit 155, the external recording medium 300, and the broadcast receiving apparatus 100.

The control unit 160 reads the multimedia content stored in the external recording medium 300 according to an exemplary embodiment of the present invention, but the present invention is not limited to such a configuration. Alternatively, the control unit 160 may read data, including the multimedia content and the broadcast content stored in the external recording medium 300 and generate a content list therewith.

The control unit 160 may change the content type as a result of user manipulation using a hot key on the remote control apparatus 200 in a broadcast receiving apparatus and a method for replay content thereby according to an exemplary embodiment of the present invention. The number of hot keys on the remote control apparatus 200 is not limited to the predetermined number of content types supported by the broadcast receiving apparatus. Although a plurality of content types are available on the remote control apparatus 200, the number of hot keys may be less than the available content types, as long as at least one hot key is provided.

As described above, multitasking is possible in which a user can search or replay selected content while a video signal processing a broadcast signal received from a broadcast station is displayed on a display.

Furthermore, because a menu for searching or replaying multimedia content using a content searching key to search the multimedia content is provided, the inconvenience to use an initial menu to search for multimedia content can be avoided.

Furthermore, fast content change is enabled among wide range of multimedia content according to an exemplary embodiment of the present invention. That is, previously selected content is changed to another type of content rapidly by simply manipulating a content searching key.

The foregoing exemplary embodiments and advantages are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for replaying content comprising:
outputting a first type of content on a first screen of a display (S410);
controlling to output a list of a second type of content on a second screen of the display (S430); and
replaying the first and the second type of content on the first and second screens simultaneously (S450).

2. The method of claim 1, wherein the first type of content is a broadcast signal received from a broadcast station, and the second type of content comprises multimedia content comprising at least one of recorded content, picture, video, and music.

3. The method of claim 1 or 2, wherein the controlling comprises controlling to output the first type of content on the second screen if one in the list of the second type of content on the second screen is selected while the first type of content is output on the first screen, and to output the selected second type of content on the first screen.

4. The method of claim 1, 2 or 3, wherein the controlling comprises controlling to output the list of the second type of content on a list display area, and to output a video corresponding to activated content from the list on a content display area,
wherein the second screen comprises the content display area, and the list display area.

5. The method of any preceding claim, wherein the controlling comprises controlling to output selected content on the first screen if content from the list of the second type of content output on the second screen is selected by user manipulation using a remote control apparatus.

6. The method of claim 5, wherein the controlling further comprises controlling to change lists of the second content type output on the second screen as a result of another user manipulation of the remote control apparatus.

7. The method of any preceding claim, wherein the controlling further comprises controlling to process the broadcast signal and output the processed broadcast signal as a video signal on the first screen.

8. The method of any preceding claim, wherein a size of the first screen is larger than a size of the second screen.

9. The method of any preceding claim, wherein the sizes of the first and second screens are adjustable by a user.

10. The method of any preceding claim, wherein a position of the second screen is settable by a user.

11. The method of any preceding claim, wherein the controlling comprises controlling to change the second type of content as a result of user manipulation using a hot key on a remote control apparatus.

12. A broadcast receiving apparatus comprising:
a display (530) which displays a first screen for outputting a first type of content, and a second screen for outputting a list of a second type of content; and
a control unit which controls to output the first type of content on the first screen, and to output the list of the second type of content on the second screen, and controls to replay the first type of content and the second type of content simultaneously.

13. The apparatus of claim 12, wherein the first type of content is a broadcast signal received from a broadcast station, and the second type of content comprises a multimedia content comprising at least one of recorded content, picture, video, and music.

14. The apparatus of claim 12 or 13, wherein the control unit (510) controls to output the first type of content on the second screen, and to output the selected second type of content on the first screen if one item from the list of the second type of content on the second screen is selected while the first type of content is output on the first screen.

15. The apparatus of claim 12, 13 or 14, wherein the second screen comprises a content display area, and a list display area, and the control unit (510) controls to output the list of the second type of content on the list display area, and to output video corresponding to activated content in the list of the second type of content on the content display area.

16. The apparatus of claim 12, 13, 14 or 15, wherein the control unit (510) controls to output selected content on the first screen if content from the list of the second type of content output on the second screen is selected by user manipulation using a remote control apparatus (200).

17. The apparatus of claim 16, wherein the control unit (510) controls to change lists according to the second content type output on the second screen by another user manipulation using the remote control apparatus (200).

18. The apparatus of any one of claims 12-17, wherein a size of the first screen is larger than a size of the second screen.

19. The apparatus of any one of claims 12-18, wherein the sizes of the first and second screens are adjustable by a user.

20. The apparatus of any one of claims 12-19, wherein the position of the second screen is settable by a user.

21. The apparatus of any one of claims 12-20, wherein the control unit (510) further controls to process the broadcast signal and to output the processed signal as a video signal on the first screen.

22. The apparatus of any one of claims 12-21, wherein the control unit (510) controls to change the second type of content as a result of user manipulation using a hot key on a remote control apparatus (200).

23. A method for replaying content comprising:
outputting a first type of content on a first screen of a display (S610); and
outputting the first type of content and a second type of content on a second screen of the display (S630).
